(19) Europäisches Patentamt / European Patent Office / Office européen des brevets

(11) **EP 3 580 441 B1**

# (12) FASCICULE DE BREVET EUROPEEN

(45) Date de publication et mention de la délivrance du brevet:
**18.08.2021 Bulletin 2021/33**

(21) Numéro de dépôt: **18708163.3**

(22) Date de dépôt: **07.02.2018**

(51) Int Cl.:
*F02C 9/58* *(2006.01)* *B64C 11/30* *(2006.01)*
*B64D 27/10* *(2006.01)*

(86) Numéro de dépôt international:
**PCT/FR2018/050306**

(87) Numéro de publication internationale:
**WO 2018/146422 (16.08.2018 Gazette 2018/33)**

(54) **PROCÉDÉ DE RÉGULATION DE LA VITESSE ET DE LA PUISSANCE D'UNE HÉLICE DE TURBOMACHINE**

VERFAHREN ZUR STEUERUNG DER DREHZAHL UND DER LEISTUNG EINES TURBINENMOTORPROPELLERS

METHOD FOR CONTROLLING THE SPEED AND THE POWER OF A TURBINE ENGINE PROPELLER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.02.2017 FR 1750999**

(43) Date de publication de la demande:
**18.12.2019 Bulletin 2019/51**

(73) Titulaire: **Safran Aircraft Engines**
**75015 Paris (FR)**

(72) Inventeur: **DJELASSI, Cedrik**
**77550 Moissy-Crayamel Cedex (FR)**

(74) Mandataire: **Regimbeau**
**20, rue de Chazelles**
**75847 Paris Cedex 17 (FR)**

(56) Documents cités:
**WO-A1-2014/083259      US-A1- 2013 323 050**

**Description**

## DOMAINE TECHNIQUE GÉNÉRAL ET ART ANTÉRIEUR

L'invention concerne la régulation de puissance des turbopropulseurs.

Dans les turbopropulseurs modernes, la vitesse de rotation de l'hélice et la puissance transmise à l'hélice sont contrôlés par l'intermédiaire de régulateurs agissant sur deux paramètres : le calage de l'hélice du turbopropulseur et le débit de carburant injecté dans la chambre de combustion.

Deux modes de régulation sont classiquement utilisés et alternent en fonction des phases de fonctionnement.

Dans un mode dit « mode vitesse » (« speed mode » selon la terminologie anglo-saxonne), la vitesse de l'hélice est régulée par la commande de son angle de calage. Dans ce mode, le débit carburant est utilisé pour fixer le couple ou la puissance délivrée à l'hélice.

Dans un autre mode, appelé « mode béta », la vitesse de rotation de l'hélice est contrôlée par le débit de carburant, le calage de l'hélice étant fixé en fonction des conditions de vol et de la manette des gaz.

Dans cette configuration, le calage est en général fixé pour correspondre à un pas minimal en deçà duquel l'hélice ne fonctionne plus en mode propulseur et ne dissipe de ce fait plus l'énergie qui lui est transmise.

Dans un turbopropulseur, la vitesse de rotation de l'hélice peut être exprimée par une équation dérivée du bilan énergétique du groupe motopropulseur :

$$Pw_T - Pw_H = J_{Tot} \cdot \omega_p \cdot \frac{d\omega_p}{dt}$$

Les puissances extérieures appliquées au système étant la puissance délivrée par la turbine de puissance $Pw_T$ et la puissance dissipée par l'hélice $Pw_H$, cette équation traduit une variation de l'énergie cinétique de l'hélice, via le moment d'inertie $J_{Tot}$ de l'ensemble hélice, turbine de puissance et arbre de transmission et la vitesse de rotation de l'hélice $\omega p$ lorsque les puissances appliquées à cette hélice ne s'équilibrent plus. Les moyens de contrôle de la vitesse de rotation de l'hélice sont donc de moduler la puissance délivrée par le moteur, via le débit de carburant injecté, et la puissance dissipée par l'hélice.

Cette puissance dissipée par l'hélice peut s'exprimer ainsi :

$$Pw_H = CP * \rho * n^3 * D^5$$

Le coefficient de puissance est noté (CP), $\rho$ étant la masse volumique de l'air, n le régime de rotation de l'hélice (nombre de tours par minutes), D le diamètre de l'hélice.

Le coefficient de puissance d'une hélice est une donnée permettant d'exprimer la puissance dissipée par l'hélice, et par conséquent le rendement de cette hélice.

Au cours des phases de fonctionnement de l'aéronef, il peut arriver que le coefficient de puissance chute, pouvant même s'annuler dans certains cas. La puissance de traction de l'hélice est alors annulée, et l'énergie fournie par le moteur à l'hélice n'est alors plus dissipée. Cette accumulation d'énergie se traduit par une augmentation du régime de rotation de l'hélice en dehors de son domaine de fonctionnement, l'hélice étant alors considérée en survitesse.

Dans des cas plus critiques, l'action du vent relatif sur l'hélice lui transmet de l'énergie supplémentaire, faisant donc passer la valeur du coefficient de puissance CP dans le domaine négatif, traduisant l'apport d'énergie de l'hélice aux éléments mécaniques du moteur. Ce phénomène d'auto-accélération représente non seulement un danger pour le comportement de l'aéronef mais également pour ses éléments mécaniques.

Il est donc nécessaire de garantir le fonctionnement propulseur de l'hélice en contrôlant les paramètres influant sur le coefficient de puissance CP pour le maintenir au-dessus d'une valeur limite minimale du coefficient de puissance CPmin, déterminée par étude lors de la conception. La limite minimale du coefficient de puissance CPmin peut prendre différentes valeurs en fonction de différents paramètres de vol, notamment la vitesse et l'altitude. Des tables de valeurs limites minimales de coefficient de puissance CPmin sont alors établies en fonction de ces paramètres.

La difficulté d'estimation du coefficient de puissance minimal CPmin amène l'avionneur à adopter des marges importantes de fonctionnement dans le choix d'une butée de calage minimal βmin, correspondant au calage de l'hélice lorsque le coefficient de puissance CP a une valeur de limite minimale CPmin. Le système de régulation de puissance est donc privé d'une partie de son domaine de fonctionnement exploitable. Cette perte est d'autant plus ressentie lors d'étapes de fonctionnement nécessitant un pas très court, comme en descente ou au ralenti. Cela cause donc des instabilités du système de commande qui ne parvient pas à maintenir le régime moteur dans ces cas de fonctionnement.

Les documents WO 2014/083259 A1 et US 2013/323050 divulguent d'autres procédés de régulation d'hélice de turbomachine.

## PRÉSENTATION GÉNÉRALE DE L'INVENTION

Un but général de l'invention est de résoudre les problématiques de l'art antérieur.

Notamment, un but de l'invention est d'augmenter la précision d'estimation de la valeur de calage minimale garantissant à l'hélice de rester dans son mode de fonctionnement propulseur.

Un autre but de l'invention est d'estimer en continu et par itération la valeur de calage minimale garantissant à l'hélice de rester dans son mode de fonctionnement propulseur.

Selon un aspect, l'invention a pour objet un procédé de régulation de la vitesse et de la puissance d'une hélice de turbomachine, dans lequel on met en œuvre au moins deux modes de fonctionnement :

- l'un, dit « mode vitesse », dans lequel on commande le calage de l'hélice ($\beta$) en fonction de la vitesse d'hélice souhaitée, tandis que le débit carburant est commandé en fonction du couple souhaité,
- l'autre, dit « mode $\beta$ », dans lequel on commande le débit de carburant en fonction de la vitesse d'hélice souhaitée, le calage de l'hélice étant fixé à un angle de butée qui limite le calage de l'hélice dans les deux modes de fonctionnement,

caractérisé en ce que l'angle de butée est calculé et mis à jour en continu pendant un vol en fonction de paramètres relatifs aux conditions de vol estimés en temps réel.

Un tel procédé est avantageusement complété par les différentes caractéristiques suivantes prises seules ou selon toutes leurs combinaisons possibles :

- l'angle de butée est calculé et mis à jour en continu par une boucle d'estimation corrigeant par itérations l'angle de butée en fonction des paramètres relatifs aux conditions de vol estimés en temps réel ainsi que d'une valeur de coefficient de puissance minimale estimée en conception ;
- un paramètre de conditions de vol estimé en temps réel et utilisé dans le calcul et la mise à jour continus de l'angle de butée est un Mach hélicoïdal et/ou un coefficient d'avancement ;
- la boucle d'estimation met en œuvre à chaque itération le traitement suivant :

  - Acquisition des paramètres de conditions de vol
  - Détermination en fonction de ces paramètres et d'un angle de butée de l'itération précédente d'un coefficient de puissance associé à ces paramètres et à cet angle de butée
  - Comparaison de ce coefficient de puissance avec un coefficient de puissance minimal défini en conception
  - En fonction du signal d'erreur en sortie de cette étape de comparaison, mise à jour de l'angle de butée par une fonction de correction ;

- lors de l'étape de détermination, la valeur du coefficient de puissance est déterminée en fonction d'une table de coefficients de puissance préalablement mémorisée ;
- la valeur du coefficient de puissance minimal varie en fonction d'un ou plusieurs paramètres ;
- il comporte une détection d'atteinte de l'angle de butée, cette détection déclenchant le basculement du « mode vitesse » au « mode $\beta$»;
- la régulation du débit de carburant met en œuvre une boucle de contrôle de puissance et une boucle de suivi de la consigne de vitesse hélice ;
- il comporte un intégrateur commun auxdites boucles des différents modes de régulation du débit de carburant.

L'invention concerne également une turbomachine comportant des moyens de traitement mettant en œuvre un procédé de régulation du type précité.

## PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- La figure 1 est une représentation schématique du fonctionnement du système d'estimation de la valeur de la butée de calage $\beta$min correspondante aux conditions de vol en temps réel.
- La figure 2 est une représentation schématique sous forme de schéma bloc du fonctionnement du correcteur utilisé dans la boucle de calcul de la butée de calage βmin.

- La figure 3 est une représentation sous forme de logigramme des étapes du procédé d'estimation en continu par itération de la butée de calage βmin.
- La figure 4 représente une cartographie du coefficient de puissance de l'hélice CP en fonction du coefficient d'avancement J, du Mach hélicoïdal à 70% du rayon d'hélice Mw et du calage d'hélice β.
- La figure 5 est une représentation schématique du fonctionnement du système de comparaison entre la valeur de β et celle de βmin permettant de détecter l'atteinte de la valeur de butée par β.
- La figure 6 est une représentation schématique du fonctionnement du système de régulation du débit de carburant injecté dans la chambre de combustion.

## DESCRIPTION D'UN OU PLUSIEURS MODES DE MISE EN ŒUVRE ET DE RÉALISATION

### Estimation en continu par itération de la butée de calage

Le procédé proposé estime et met à jour en continu pendant un vol l'angle de butée de calage minimal βmin en fonction de paramètres relatifs aux conditions de vol estimés en temps réel.

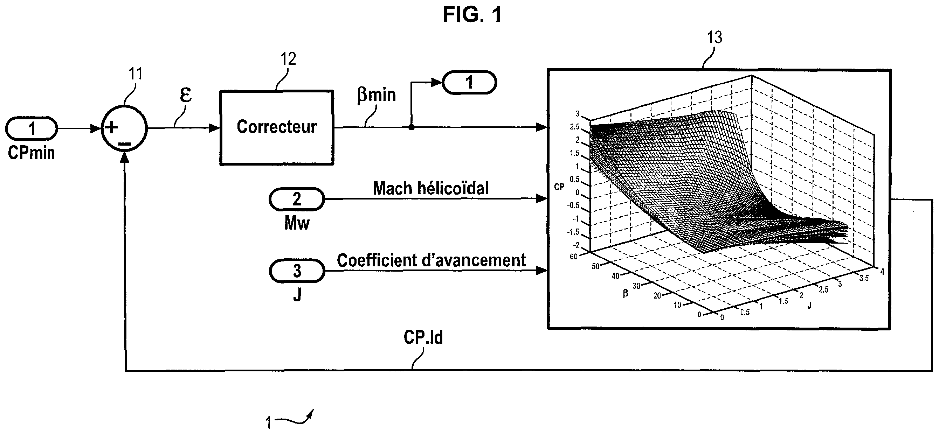

Cette estimation est réalisée par un calculateur qui est embarqué dans un aéronef pour commander le turbopropulseur et en réguler la puissance. Ce calculateur met en œuvre une boucle d'asservissement du type de la boucle 1 illustrée sur la figure 1.

La boucle d'asservissement 1 comporte trois paramètres d'entrée :

- le coefficient de puissance d'hélice minimal CPmin déterminé initialement en conception par des études de sensibilité,
- un Mach hélicoïdal exprimé à 70% du rayon d'hélice Mw(t),
- un coefficient d'avancement J(t).

La valeur CPmin de coefficient de puissance minimal CPmin est par exemple une valeur de référence utilisée pour l'ensemble des conditions de vol.

Elle peut également être variable et prendre différentes valeurs discrètes dans le temps en fonction de différents paramètres tels que la vitesse ou l'altitude.

Le coefficient de puissance minimal CPmin(t) est injecté dans un comparateur 11 avec un coefficient de puissance identifié CP.Id(t). L'erreur ε en sortie de ce comparateur 11 (différence entre le coefficient de puissance minimal CPmin et le coefficient de puissance identifié CP.Id(t)) est injectée dans un correcteur 12.

Ce correcteur 12 retenu peut être un correcteur proportionnel intégral d'expression suivante :

$$C\left(z^{-1}\right) \frac{1}{\text{Gain2}} \left[ 1 + \frac{\left(1 - z^{-1}\right)}{\text{Te}} \cdot \tau_2 \right] \cdot \frac{\text{Te}}{\left(1 - z^{-1}\right)}$$

où :

- z est le paramètre d'entrée
- Te, Gain2 et $\tau_2$ sont des paramètres du correcteur

Le correcteur 12 transforme l'erreur différentielle qu'il reçoit en entrée en un signal correspondant à la valeur de butée de calage βmin (t) assurant le mode de fonctionnement propulsif de l'hélice aux conditions de vol à cet instant t.

La valeur de sortie βmin(t) du correcteur 12 est ensuite injectée dans une mémoire du calculateur utilisée pour la régulation de puissance du turbopropulseur, où il remplace l'ancienne valeur de butée de calage.

Cette valeur de sortie est également envoyée, avec la valeur instantanée de Mach hélicoïdal Mw(t) et le coefficient d'avancement J(t), en entrée d'un bloc 13 mémorisant une cartographie de coefficients de puissance CP.

Ce bloc 13 et la cartographie qu'il mémorise permettent l'identification d'un coefficient de puissance minimal CP.Id(t+1) en fonction de ses paramètres d'entrée. Le coefficient CP.Id(t+1) est ensuite réinjecté dans le comparateur 11 pour être comparé au coefficient minimal défini en conception CPmin.

Cet exemple décrivant un mode de réalisation dans lequel la cartographie des valeurs de coefficients de puissance CP prend en compte trois paramètres n'est pas limitatif. Il est envisageable de prendre en compte un nombre de paramètres différent pour affiner ou simplifier cette cartographie.

Cette boucle est itérée en continu pendant l'ensemble du vol.

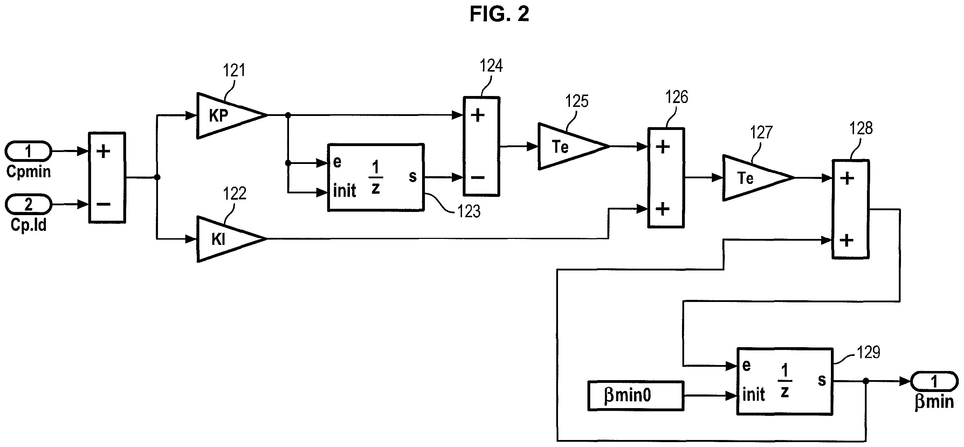

En référence à la figure 2, le correcteur 12 reçoit en entrée la différence entre le coefficient de puissance minimal CpMin et le coefficient de puissance identifié CpId. Cette entrée est injectée dans deux gains statiques 121 et 122.

La sortie du gain statique 121 est injectée dans un intégrateur 123 et un sommateur 124.

Le sommateur 124 soustrait la sortie de l'intégrateur 123 à la sortie du gain statique 121.

La sortie du sommateur 124 est injectée dans un gain statique 125, dont la sortie est additionnée par un sommateur 126 à la sortie du gain statique 122.

La sortie du sommateur 126 est ensuite injectée dans un gain statique 127 dont la sortie est injectée dans un sommateur 128, additionnant la sortie du gain statique 127 au signal de sortie βmin.

La sortie de ce sommateur 128 est injectée dans un intégrateur 129, dont la valeur d'initialisation est une valeur de sécurité βmin0.

Les coefficients des différents gains statiques 121, 122 sont réglés empiriquement.

Les gains statiques 125 et 127 correspondent à la période d'échantillonnage et de calcul du correcteur.

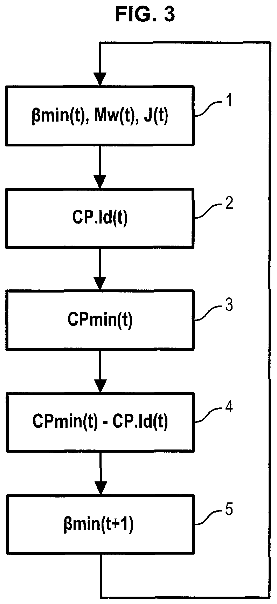

La figure 3 présente le même procédé sous la forme d'un logigramme.

Une première étape (étape 1) correspond à l'acquisition des paramètres qui permettront d'exécuter le procédé d'identification de la butée de calage βmin, dans ce cas la butée de calage en mémoire βmin(t), le Mach hélicoïdal Mw(t) et le coefficient d'avancement J(t).

Lors de l'initialisation du système, le premier pas itératif prend donc comme valeur de βmin une valeur de sécurité βmin0 indépendante des paramètres extérieurs.

Ces paramètres servent dans une deuxième étape (étape 2) à identifier le coefficient de puissance CP.Id(t) correspondant sur la cartographie 13 de coefficient de puissance CP.

Après un relevé de la valeur de coefficient de puissance minimal CPmin(t) défini en conception (étape 3), les deux valeurs de coefficient de puissance sont injectées dans le comparateur 11 (étape 4).

La différence sera ensuite corrigée dans le correcteur 12 pour transformer l'information d'entrée en une consigne de modification de butée de calage βmin(t+1) (étape 5).

La butée de calage minimal βmin est donc calculée en continu et par itération en comparant un coefficient de puissance CP.Id identifié en continu à un coefficient de puissance minimal CPmin défini en conception assurant le fonctionnement en mode propulseur de l'hélice.

Cartographie du Coefficient de Puissance

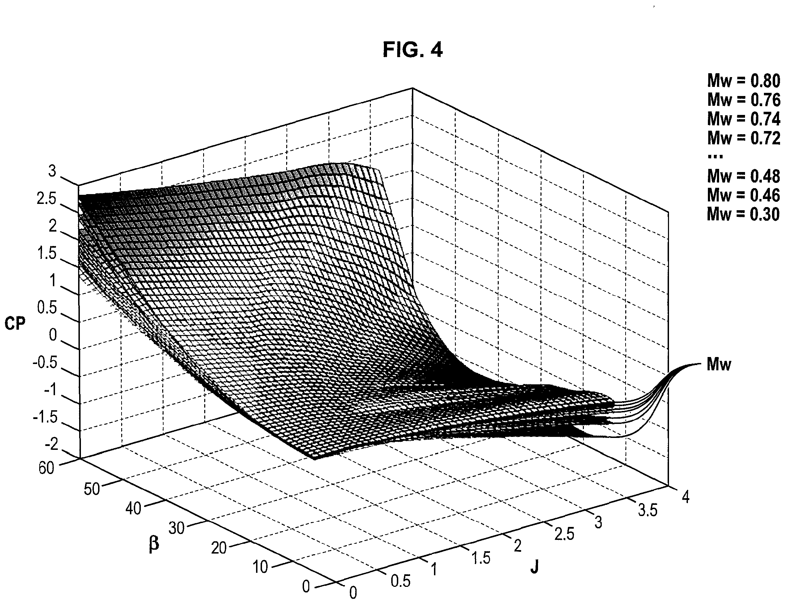

En référence à la figure 4, une cartographie du coefficient de puissance CP telle qu'utilisée dans le bloc 13 est déterminée au stade de la conception et prend en compte les trois paramètres d'influence que sont :

- Le Mach hélicoïdal Mw exprimé à une distance de l'axe de rotation équivalente à 70% du rayon de l'hélice. Il peut être exprimé en fonction de la vitesse de vol ici notée VTAS, de la vitesse périphérique d'hélice ici notée Utip et de la vitesse du son ici notée cson selon la formule :

$$Mw = \frac{\sqrt{VTAS^2 + \left(0.7 \cdot Utip\right)^2}}{cson}$$

Avec Utip = π*n*D en exprimant le diamètre de l'hélice D et le régime de rotation de l'hélice n en tours/seconde.
- Le coefficient d'avancement J peut être exprimé en fonction de la vitesse de vol VTAS, le régime de rotation n et le diamètre d'hélice D selon la formule :

$$J = \frac{VTAS}{n \cdot D}$$

- L'angle de calage d'hélice β.

Ces trois paramètres évoluant en continu au cours du vol en fonction des conditions, il en résulte que le coefficient de puissance de l'hélice CP varie également en fonction des phases de fonctionnement de l'aéronef.

Ce coefficient de puissance CP, défini par l'hélicier pendant la conception en fonction de la demande de l'avionneur, est ensuite cartographié en fonction des variations des paramètres choisis pour l'exprimer. La cartographie 13 est affinée lors de la conception par l'hélicier puis par l'avionneur pour minimiser les incertitudes d'estimation.

Les différentes nappes de valeurs de coefficient de puissance CP correspondent à différentes valeurs de mach hélicoïdal Mw comprises ici entre 0,30 et 0,80. Ces bornes ne sont cependant pas limitatives et, étant évident que la variation du mach hélicoïdal Mw est continue, cette représentation a pour seul but de mettre en lumière l'incidence des différents paramètres.

Détection de butée de calage

L'utilisation de cette identification de butée de calage minimal βmin intervient lors du mode de régulation de puissance appelé « mode vitesse », ajustant la vitesse de rotation de l'hélice en influant sur le calage β.

Lorsque cette valeur de butée est atteinte, le régime hélice ne peut être maintenu. Le système doit passer du mode de régulation dit « mode vitesse » au « mode β ».

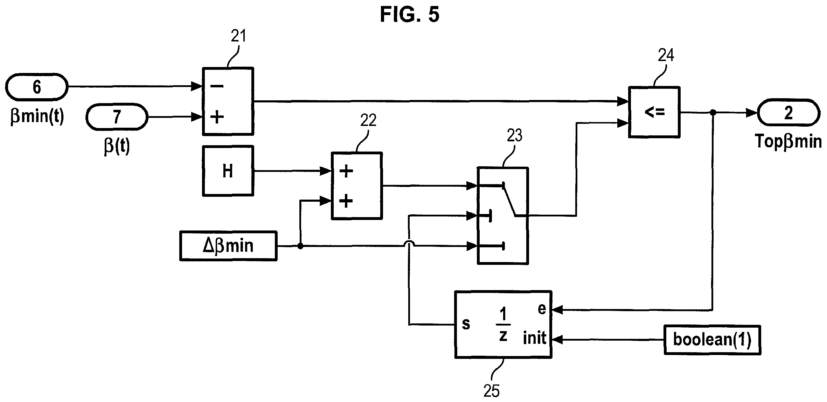

En référence à la figure 5, la permutation d'un mode à l'autre est déclenchée par l'intermédiaire d'un système de détection d'atteinte de butée de calage minimal 2.

La boucle de détection d'atteinte de butée de calage comporte 4 paramètres d'entrée :

- La butée de calage βmin(t)
- Le calage de l'hélice β(t)
- Le pas de mise à jour de butée de calage Δβmin
- Une marge de fonctionnement H entraînant un effet d'hystérésis

En entrée de boucle, le calage de l'hélice β(t) et la butée de calage βmin(t) sont injectées dans un comparateur 21. Ce comparateur 21 soustrait la butée de calage βmin(t) au calage de l'hélice β(t).

Les deux autres entrées, la marge de fonctionnement H et le pas de mise à jour de la butée de calage Δβmin sont injectées dans un sommateur 22.

Le signal de sortie du sommateur 22 et injecté dans un sélecteur à 3 entrées 23 émettant en sortie le signal de sortie du sommateur 22.

Les signaux de sortie du comparateur 21 et du sélecteur 23 sont injectés dans un opérateur logique 24, qui émettra un signal de sortie quand les deux signaux d'entrée seront égaux.

Un signal binaire Topβmin est émis à un niveau logique associé à 1 lorsque la différence entre le calage β et la butée de calage βmin est inférieure à la variation de la butée de calage Δβmin ajoutée à une marge définie en conception provoquant un effet d'hystérésis. Cette marge évite ainsi de basculer d'un mode de régulation à l'autre de manière répétée dans le cas d'un fonctionnement stabilisé à la limite de la valeur de basculement.

Ceci peut se traduire par l'équation :

$$\text{Top}\beta\text{Min} = \text{TRUE si} : \beta = \beta\text{Min} + \Delta\beta\text{Min} +/- H$$

Lorsque le signal émis Topβmin par ce système de permutation de commande est vrai, le mode de régulation change, passant du « mode vitesse » au « mode β ».

Topβmin est retourné au sélecteur 23 par l'intermédiaire d'un intégrateur 25.

Permutation entre le « mode vitesse » et le « mode β »

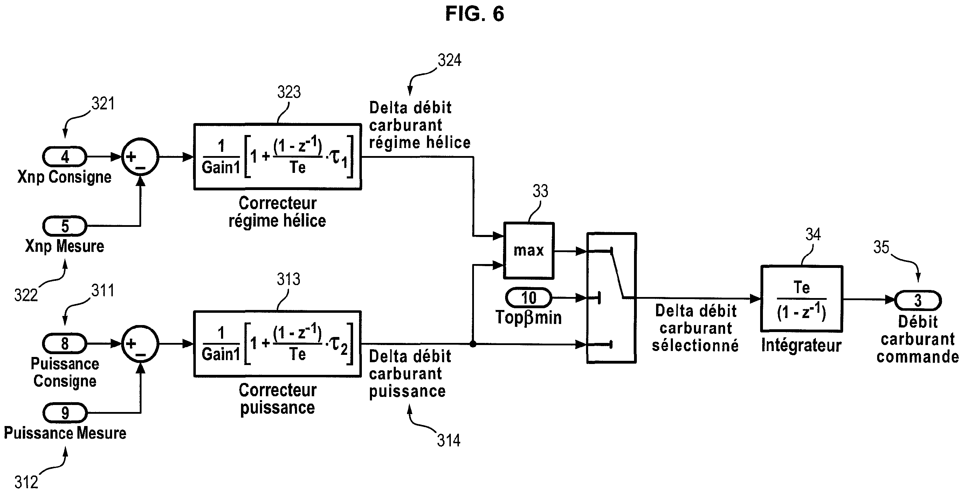

En référence à la figure 6, un système de régulation de puissance 3 permet de moduler le débit de carburant pour suivre la consigne de vitesse hélice. Plus précisément, l'existence de deux boucles de commande de débit de carburant est détaillée.

L'une des boucles correspond à une commande de la puissance via le débit de carburant 31, associée au fonctionnement du « mode vitesse ».

La consigne de puissance du moteur 311 est comparée à la puissance mesurée 312. La différence est injectée dans un correcteur 313 pour être transformée en consigne de variation de débit de carburant 314 permettant d'ajuster la puissance pour suivre la consigne.

La seconde boucle correspond à une commande de régime de rotation d'hélice 32, plus précisément au soutien du régime hélice par adaptation de la puissance via le débit de carburant, associée au fonctionnement du « mode β ».

La consigne de régime d'hélice 321, donc de régime moteur car le calage β est fixé dans ce mode, est comparée au régime mesuré 322. La différence est injectée dans un correcteur 323 pour être transformée en consigne de variation de débit de carburant 324 permettant de suivre la consigne de régime moteur.

Lorsque le signal de sortie du détecteur de butée Topβmin est détecté comme vrai, ces deux consignes 314, 324 sont comparées par un opérateur 33.

La boucle de commande de débit de carburant proposant la commande de variation de débit de carburant la plus importante prendra donc le pas sur l'autre, correspondant à un opérateur « max ».

Le terme intégrateur 34 des correcteurs est basculé en fin de boucle, après l'opérateur max 33, afin de n'intégrer que la différence entre la commande effective 35 du système et la réponse évitant ainsi un effet « wind up » du système.

**Revendications**

1. Procédé de régulation de la vitesse et de la puissance d'une hélice de turbomachine, dans lequel on met en œuvre au moins deux modes de fonctionnement :

   - l'un, dit « mode vitesse », dans lequel on commande le calage de l'hélice ($\beta$) en fonction de la vitesse d'hélice souhaitée, tandis que le débit carburant est commandé en fonction du couple souhaité,
   - l'autre, dit « mode $\beta$ », dans lequel on commande le débit de carburant en fonction de la vitesse d'hélice souhaitée, le calage de l'hélice ($\beta$) étant fixé à un angle de butée ($\beta$min) qui limite le calage de l'hélice dans les deux modes de fonctionnement, **caractérisé en ce que** l'angle de butée ($\beta$min(t)) est calculé et mis à jour en continu pendant un vol en fonction de paramètres relatifs aux conditions de vol estimés en temps réel.

2. Procédé de régulation selon la revendication 1, **caractérisé en ce que** l'angle de butée ($\beta$min(t)) est calculé et mis à jour en continu par une boucle d'estimation (1) corrigeant par itérations l'angle de butée ($\beta$min(t)) en fonction des paramètres relatifs aux conditions de vol estimés en temps réel ainsi que d'une valeur de coefficient de puissance minimale (CPmin) estimée en conception.

3. Procédé de régulation selon l'une des revendications 1 ou 2, **caractérisé en ce qu'**un paramètre de conditions de vol estimé en temps réel et utilisé dans le calcul et la mise à jour continus de l'angle de butée est un Mach hélicoïdal (Mw(t)) et/ou un coefficient d'avance (J(t)).

4. Procédé de régulation selon la revendication 2, **caractérisé en ce que** la boucle d'estimation (1) met en œuvre à chaque itération le traitement suivant :

   - Acquisition des paramètres de conditions de vol (Mw(t)) et (J(t))
   - Détermination en fonction de ces paramètres et d'un angle de butée ($\beta$min(t)) de l'itération précédente d'un coefficient de puissance associé (CP.Id(t)) à ces paramètres et à cet angle de butée ($\beta$min(t))
   - Comparaison de ce coefficient de puissance (CP.Id(t)) avec un coefficient de puissance minimal (CPmin) défini en conception
   - En fonction du signal d'erreur en sortie de cette étape de comparaison, mise à jour de l'angle de butée ($\beta$min(t+1)) par une fonction de correction.

5. Procédé de régulation selon la revendication 4, **caractérisé en ce que** lors de l'étape de détermination, la valeur du coefficient de puissance (CP.Id(t)) est déterminée en fonction d'une table (13) de coefficients de puissance (CP) préalablement mémorisée.

6. Procédé selon la revendication 2, **caractérisé en ce que** la valeur du coefficient de puissance minimal (CPmin(t)) varie en fonction d'un ou plusieurs paramètres.

7. Procédé selon l'une des revendications précédentes, **caractérisé en ce qu'**il comporte une détection d'atteinte (2) de l'angle de butée ($\beta$min), cette détection déclenchant le basculement du « mode vitesse » au « mode $\beta$ ».

8. Procédé selon l'une des revendications précédentes, **caractérisé en ce que** la régulation du débit de carburant (3) met en œuvre une boucle de contrôle de puissance (31) et une boucle de suivi de la consigne de vitesse hélice (32).

9. Procédé selon la revendication 8, **caractérisé en ce qu'**il comporte un intégrateur (34) commun auxdites boucles (31, 32) des différents modes de régulation du débit de carburant.

10. Turbomachine comportant des moyens de traitement apte à mettre en œuvre un procédé de régulation de puissance tel que défini selon les revendications précédentes.

**Patentansprüche**

1. Verfahren zur Regelung der Drehzahl und der Leistung eines Turbinenmotorpropellers, in dem mindestens zwei Betriebsmodi eingesetzt werden:

   - ein sogenannter "Drehzahlmodus", in dem der Neigungswinkel ($\beta$) des Propellers in Abhängigkeit von der gewünschten Propellerdrehzahl gesteuert wird, während die Treibstoffdurchflussmenge in Abhängigkeit vom gewünschten Drehmoment gesteuert wird,
   - einen anderen, sogenannten "$\beta$-Modus", in dem die Treibstoffdurchflussmenge in Abhängigkeit von der gewünschten Propellerdrehzahl gesteuert wird, wobei der Neigungswinkel ($\beta$) des Propellers auf einen Anschlagwinkel ($\beta min$) festgelegt wird, der den Neigungswinkel des Propellers in den zwei Betriebsmodi begrenzt, **dadurch gekennzeichnet, dass** der Anschlagwinkel ($\beta min(t)$) während eines Flugs ununterbrochen in Abhängigkeit von Parametern berechnet und aktualisiert wird, die die in Echtzeit geschätzten Flugbedingungen betreffen.

2. Regelungsverfahren nach Anspruch 1, **dadurch gekennzeichnet, dass** der Anschlagwinkel ($\beta min(t)$) ununterbrochen durch eine Schätzungsschleife (1) berechnet und aktualisiert wird, die durch Iterationen den Anschlagwinkel ($\beta min(t)$) in Abhängigkeit von den Parametern, die die in Echtzeit geschätzten Flugbedingungen betreffen, sowie eines bei der Gestaltung geschätzten Mindestleistungskoeffizientwerts (CPmin) in Echtzeit korrigiert.

3. Regelungsverfahren nach Anspruch 1 oder 2, **dadurch gekennzeichnet, dass** ein in Echtzeit geschätzter und bei der ununterbrochenen Berechnung und Aktualisierung des Anschlagwinkels geschätzter Flugbedingungsparameter eine helikale Mach-Zahl ($Mw(t)$) und/oder ein Fortschrittsgrad ($J(t)$) ist.

4. Regelungsverfahren nach Anspruch 2, **dadurch gekennzeichnet, dass** die Schätzungsschleife (1) bei jeder Iteration die folgende Verarbeitung durchführt:

   - Erfassung der Flugbedingungsparameter ($Mw(t)$) und ($J(t)$),
   - Bestimmung, in Abhängigkeit von diesen Parametern und einem Anschlagwinkel ($\beta min(t)$) der vorhergehenden Iteration, eines Leistungskoeffizienten ($CP.Id(t)$), der mit diesen Parametern und mit diesem Anschlagwinkel ($\beta min(t)$) verbunden ist,
   - Vergleich dieses Leistungskoeffizienten ($CP.Id(t)$) mit einem bei der Gestaltung definierten Mindestleistungskoeffizienten (CPmin)
   - in Abhängigkeit von dem Fehlersignal am Ausgang dieses Vergleichsschritts, Aktualisierung des Anschlagwinkels ($\beta min(t+1)$) durch eine Korrekturfunktion.

5. Regelungsverfahren nach Anspruch 4, **dadurch gekennzeichnet, dass** beim Bestimmungsschritt der Wert des Leistungskoeffizienten ($CP.Id(t)$) in Abhängigkeit von einer im Voraus gespeicherten Tabelle (13) von Leistungskoeffizienten (CP) bestimmt wird.

6. Verfahren nach Anspruch 2, **dadurch gekennzeichnet, dass** der Wert des Mindestleistungskoeffizienten ($CPmin(t)$) in Abhängigkeit von einem oder mehreren Parametern variiert.

7. Verfahren nach einem der vorhergehenden Ansprüche, **dadurch gekennzeichnet, dass** es eine Feststellung des Erreichens (2) des Anschlagwinkels ($\beta min$) umfasst, wobei diese Feststellung das Umschalten vom "Drehzahlmodus" in den "$\beta$-Modus" auslöst.

8. Verfahren nach einem der vorhergehenden Ansprüche, **dadurch gekennzeichnet, dass** die Regelung der Treibstoffdurchflussmenge (3) eine Leistungssteuerungsschleife (31) und eine Schleife zur Verfolgung des Propellerdrehzahl-Einstellwerts (32) einsetzt.

9. Verfahren nach Anspruch 8, **dadurch gekennzeichnet, dass** es einen Integrator (34) umfasst, der den Schleifen (31, 32) der verschiedenen Regelungsmodi des Kraftstoffdurchflusses gemein ist.

10. Turbinenmotor, der Verarbeitungsmittel umfasst, die geeignet sind, ein Leistungsregelungsverfahren nach einem der vorhergehenden Ansprüche durchzuführen.

**Claims**

1. A method for regulating the speed and power of a turbomachine propeller, wherein at least two operating modes are implemented:

   - one, called "speed mode", in which the propeller pitch (β) is controlled based on the desired propeller speed, while the fuel flow rate is controlled based on the desired torque,
   - the other, called "β mode", in which the fuel flow rate is controlled based on the desired propeller speed, the propeller pitch (β) being set at a stop angle (βmin) which limits the propeller pitch in the two operating modes, **characterized in that** the stop angle (βmin(t)) is calculated and continuously updated during a flight based on parameters relating to the flight conditions estimated in real time.

2. The regulation method according to claim 1, **characterized in that** the stop angle (βmin(t)) is calculated and continuously updated by an estimation loop (1) correcting by iterations the stop angle (βmin(t)) based on the parameters relating to the flight conditions estimated in real time as well as a minimum power coefficient value (CPmin) estimated in design.

3. The regulation method according to any of claim 1 or 2, **characterized in that** a flight condition parameter estimated in real time and used in the continuous calculation and update of the stop angle is a helical Mach (Mw(t)) and/or an advance coefficient (J(t)) .

4. The regulation method according to claim 2, **characterized in that** the estimation loop (1) implements on each iteration the following processing:

   - Acquisition of the flight condition parameters (Mw(t)) and (J(t))
   - Determination based on these parameters and on a stop angle (βmin(t)) of the previous iteration of a power coefficient (CP.Id(t)) associated with these parameters and with this stop angle (βmin(t))
   - Comparison of this power coefficient (CP.Id(t)) with a minimum power coefficient (CPmin) defined in design
   - Based on the error signal at the output of this comparison step, update of the stop angle (βmin(t+1)) by a correction function.

5. The regulation method according to claim 4, **characterized in that** during the determination step, the value of the power coefficient (CP.Id(t)) is determined based on a table (13) of previously stored power coefficients (CP).

6. The method according to claim 2, **characterized in that** the value of the minimum power coefficient (CPmin(t)) varies based on one or more parameters.

7. The method according to any of the preceding claims, **characterized in that** it includes a detection of reaching (2) the stop angle (βmin), this detection triggering the switching from "speed mode" to "β mode".

8. The method according to any of the preceding claims, **characterized in that** the regulation of the fuel flow rate (3) implements a power control loop (31) and a loop for tracking the propeller speed setpoint (32).

9. The method according to claim 8, **characterized in that** it includes an integrator (34) common to said loops (31, 32) of the different fuel flow rate regulation modes.

10. A turbomachine including processing means able to implement a power regulation method as defined according to the preceding claims.

# FIG. 1

EP 3 580 441 B1

FIG. 2

FIG. 3

EP 3 580 441 B1

# FIG. 4

Mw = 0.80
Mw = 0.76
Mw = 0.74
Mw = 0.72
...
Mw = 0.48
Mw = 0.46
Mw = 0.30

Mw

EP 3 580 441 B1

**FIG. 5**

## FIG. 6

**EP 3 580 441 B1**

## RÉFÉRENCES CITÉES DANS LA DESCRIPTION

### Documents brevets cités dans la description

- WO 2014083259 A1

- US 2013323050 A